# EUROPEAN PATENT SPECIFICATION

(11) **EP 2 850 841 B1**
(45) Date of publication and mention of the grant of the patent: **06.07.2022**
(21) Application number: 13734840.5
(22) Date of filing: 10.05.2013
(51) Int. Cl.: H04N 21/254, H04N 21/462, H04N 21/4627, H04N 21/61, H04N 21/643

(54) **OVER THE TOP CONTENT ACCESS**
ZUGRIFF AUF OVER-THE-TOP-CONTENT
ACCÈS À UN CONTENU OVER-THE-TOP

(30) Priority: 14.05.2012 US 201213470805
(43) Date of publication of application: 25.03.2015
(73) Proprietor: Telefonaktiebolaget LM Ericsson (publ), 164 83 Stockholm (SE)
(72) Inventor: GAVITA, Edoardo, Laval, Quebec H7M 4N4 (CA); MIRARCHI, Alberto, Montreal, Québec H3M 2W5 (CA)
(74) Representative: Ericsson
(86) International application number: PCT/IB2013/053820
(87) International publication number: WO 2013/171646

(56) References cited:
- EP-A1- 2 096 835
- WO-A1-2008/091183
- WO-A1-2011/107949
- US-A1- 2009 154 397
- US-A1- 2009 313 665
- US-A1- 2010 058 404
- US-A1- 2011 138 431

## Description

### TECHNICAL FIELD

This disclosure relates generally to mechanisms for establishing an ad hoc service level agreement between an IPTV operator and an external content provider in order to facilitate access to external content through the IPTV network.

### BACKGROUND

In the past, television programming was originally broadcast to viewer's television sets through a radio wave transmission in a defined frequency band referred to as a channel, transmitted from a broadcast tower and received by antennas located at a home. As technology progressed, these broadcast signals were retransmitted over a common access cable infrastructure to the home.

As technology has provided new or improved delivery mechanisms, they have been employed to allow for improved or enhanced television experiences. With the arrival of packet based data networks, and the processing power to properly encode and decode video data at sufficiently high frame rates, Internet Protocol Television (IPTV) is becoming more accessible. IPTV employs a packed based delivery network where infrastructure elements are employed to verify that a given use is authorized to access content before the requested content is delivered to the user.

In conventional IPTV environments, the network is built upon an Internet Multimedia Subsystem (IMS), an architectural framework which uses a plurality of Internet Protocols (IP) for delivering IP multimedia services to a user. The IMS network includes elements necessary to support IP multimedia services. The IMS network typically employs Session Initiation Protocol (SIP) as a control channel protocol. SIP commands are employed to provide control over the initiation and termination of sessions. The packets containing the actual video content are not delivered through the control session, but instead are delivered in an associated content delivery session using another protocol such as the Real-Time Streaming Protocol (RTSP).

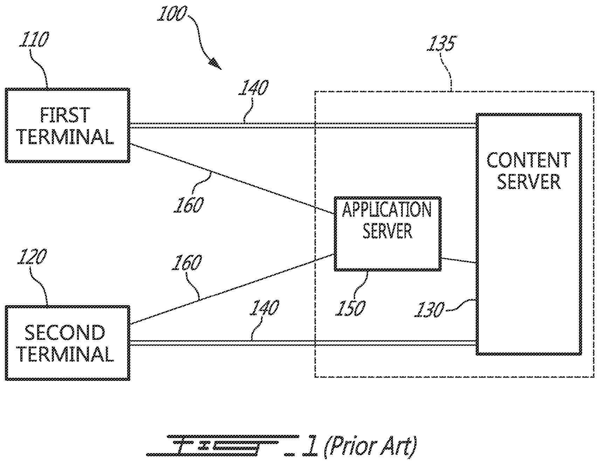

Figure 1 illustrates a high-level view of a typical IMS network architecture for supporting IPTV and other multimedia applications. A service network 100 is shown comprising a first terminal 110 and a second terminal 120, both capable of being used by end-users to enjoy IPTV and other multimedia contents. Content is provided to the terminals 110, 120 by a content server 130. The content server 130 acts as an aggregator of information and may comprise video, audio, games, photos, text, etc. These different types of media are generally stored on a hard drive at the content server 130. In the service network 100, content is sent by the content server 130 by use of RTSP media flows 140. RTSP is used in this exemplary architecture for media manipulation and control, while SIP is used for session setup. Multimedia sessions are set up between the terminals 110, 120 and the content server 130 by use of an IPTV application server 150. The application server (AS) 150 runs middleware software functions to control setting up of sessions between the terminals 110, 120 and the content server 130. For example, the AS 150 maps the SIP control session to the appropriate RTSP message for RTSP session set up. Among other functions, the AS 150 may handle authentication of users, billing of sessions, selection of one amongst several content servers 130 based on performance parameters, and the like. The set up of sessions is made by use of SIP messages exchanged on signaling links 160.

In packet based networks, such as IPTV, broadcasting data is not typically done. Instead data is either sent to a specific terminal (unicast) or sent to a plurality of terminal (multicast). Many users can join a multicast session, and from the user perspective, this may not show any differences from a conventional television broadcast.

Video on Demand (VOD) refers to systems which allow users to select and watch/listen to video or audio content on demand. IPTV technology is often used to allow a user to stream content through a set-top box, computer or other device, allowing viewing in real-time, or to download the content to a device for viewing at any time.

In the field of content delivery, Over-The-Top (OTT) content refers to online delivery of video and audio content without the service provider being actively involved in the control or distribution of the content itself. The Internet service provider, for example, may be aware that content is being consumed, but it is not responsible for, nor able to control, the viewing abilities, copyrights, or redistribution of the content. This is in contrast to content delivery through purchase or rental from an IPTV provider, a cable television operator, or the Internet service provider itself (for example, via a VOD over IP service). Consumers can access OTT content through any Internet-connected device such as personal computers, tablets, mobile phones, set-top boxes and gaming consoles. OTT content, in general, refers to content arriving from a third party, such as Netflix^{™} or Hulu^{™}, and arriving to the end user device directly, leaving the Internet service provider responsible only for transporting IP packets.

The existing IPTV provider models do not allow for dynamic access to OTT content delivered over the IPTV network to a subscriber's set-top box. The IPTV provider and a particular OTT content provider would need to define service level agreements and business agreements in advance of any OTT content being offered to an IPTV customer. Hence, current IPTV customers must subscribe directly to any extra OTT services they wish to receive.

Therefore, it would be desirable to provide a system and method that obviate or mitigate the above described problems.

Document US 2009/154397 A1 may be construed to disclose a system and method for providing quality of service enablers for third party applications. The method comprises a user equipment (UE) establishing a communications session with a third party application server hosting a selected third party application and receiving from the third party application server QoS information comprising at least one of a plurality of QoS attributes and configuring a QoS of a radio access network (RAN) in accordance with the received QoS information. The method further comprises activating the RAN QoS for the selected application; and establishing an application session with the third party application server via the RAN.

Document EP 2 096 835 A1 may be construed to disclose a system for selecting and viewing video content from the internet by a user having a screen and input means operable by the user, comprising an IPTV infrastructure including at least one caching device, an IPTV network and an IPTV connections means at the user side, such as a set-top box, said IPTV connection means being connectable to the screen and adapted for browsing the internet via the input means, said IPTV infrastructure being adapted so that video content from the internet is storeable in the caching device and streamable from the caching device to the user.

Document US 2009/0313665 may be construed to disclose a technique for licensing of digital rights over a third party network, whereby a user on a cable network can request and receive a digital licence for viewing a certain requested content.

Document WO 2008/091183 A1 maybe construed to disclose a method and an SLA portal in a communication network, for establishing an SLA (Service Level Agreement) between a third party content provider and an operator of the network for ensuring network resources needed for delivering a specific service. When an SLA request is received from the content provider for the service, at least one viable predetermined SLA is retrieved from an SLA database holding a plurality of predetermined SLAs. The retrieved at least one viable SLA is then sent on offer to the content provider.

### SUMMARY

It is an object of the present invention to obviate or mitigate at least one disadvantage of the prior art.

According to the invention, there are provided a method and an apparatus according to the independent claims. Developments are set forth in the dependent claims.

In a first example, there is provided a method for providing external content to a user in an Internet Protocol Television (IPTV) network. A request for content is received from a user device. It is determined that the requested content is offered by an external content provider. In response to determining that the external content provider and the IPTV network do not have a service level agreement, an ad hoc service level agreement is created with the external content provider. Access to the requested content is provided to the user device in accordance with the created ad hoc service level agreement.

According to the first example, it is determined that the requested content is not offered by the IPTV network.

According to the first example, information associated with the requested content can be received from the external content provider. The received information associated with the requested content can be added to a list of available content within the IPTV network. The information associated with the requested content can include metadata, which can be added to a video on demand library.

In further examples, the created ad hoc service level agreement is an agreement to provide access to the requested content to the user device. The created ad hoc service level agreement can be an agreement to provide access to the requested content to a plurality of user devices in the IPTV network. The created ad hoc service level agreement can be an agreement to provide access to a set of external content, including the request content, to the user device. Access to the requested content can be provided to the user device for a predetermined amount of time.

In further examples, the step of providing access to the requested content to the user device can include sending an availability notification to the user device including a uniform resource indicator associated with the requested content.

In a second example, there is provided an Internet Protocol Television (IPTV) middleware node. The node includes a service level agreement interface for communicating with an external content provider and a communication interface for receiving a request for content from a user device. The node includes a processor for determining that that the requested content is offered by the external content provider. In response to determining that the IPTV middleware node does not have a service level agreement with the external content provider, the processor transmits a request to create an ad hoc service level agreement with the external content provider through the service level agreement interface. The processor sends a notification to the user device that the requested content is available, in accordance with the created ad hoc service level agreement, through the communication interface.

According to the second example, the processor can determine that the requested content is not offered by the IPTV network. The service level agreement interface can receives a confirmation message from the external content provider that the ad hoc service level agreement has been created.

In a further example, the service level agreement interface can receive information associated with the requested content from the external content provider. The processor can store the received information associated with the requested content in a memory, and add the received information to a list of available content within the IPTV network. The information associated with the requested content can include metadata, which can be added to a video on demand library.

In further examples, the created ad hoc service level agreement is an agreement to provide access to the requested content to the user device. The created ad hoc service level agreement can be an agreement to provide access to a set of external content, including the request content, to the user device. Access to the requested content can be provided to the user device for a predetermined amount of time.

In a further example, the notification sent to the user device can include a uniform resource indicator associated with the requested content.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a block diagram illustrating a prior art IPTV network;
Figure 2 is a block diagram illustrating a network architecture;
Figure 3 is a call flow diagram illustrating an embodiment of the present invention;
Figure 4 is a flow chart illustrating a method of the present invention; and
Figure 5 is a block diagram of an IPTV middleware node.

### DETAILED DESCRIPTION

The present invention is directed to mechanisms for allowing an IPTV subscriber to request and dynamically access OTT content via the IPTV network.

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

Presented herein are methods and systems for IPTV middleware to negotiate an ad hoc Service Level Agreement (SLA) with an external content provider in order to provide requested content to an IPTV user.

Service Level Agreements (SLAs) typically specify the quality levels customers expect during service provisioning. A critical issue in this area is for service providers to effectively achieve the individual SLA optimization in terms of Quality of Service (QoS) metrics and price. SLAs for Multimedia Internet Service are managed and controlled in using a utility model based on the concepts of quality profile, quality-to-resource mapping, resource constraints, etc. These features provide a computationally feasible solution for admission control and quality adaptation that ensures the availability of sufficient resources to meet the minimum quality guarantee. From the perspective of an IPTV provider, a high utility value means higher quality resources. Therefore, under overload conditions without SLA adaptation, the IPTV provider may decide to discontinue a low utility service in order to provide a high utility service. Moreover, when the awaiting service requests are high utility, the provider may choose to provide service even when the SLA is violated, although, the service quality and reliability will be negatively affected. On the other hand, the IPTV provider may use an SLA adaptation technique to delegate low utility service in order to avoid service provision rejection. In this type of situation, the IPTV provider retains any resources that may prevent high utility service provision. The service delegation includes high utility service with SLA guarantees to assure excellent service quality for key mobile subscribers.

For the purpose of describing embodiments of the present invention, the term "SLA" will be used to describe an agreement between an IPTV operator and an external content provider, such as an OTT content provider. An SLA between these two parties can define both the technical and business level parameters for providing access to external OTT content within the IPTV network.

The technical SLA can include data related to source owner identity, destination owner identity, request type (i.e. new SLA request, update of SLA, removal of SLA, etc.), credentials (i.e. source IP address, source port, security or authorization credentials, etc.), QoS, and content related information (content metadata, content format, etc.). The business SLA can include data related to pricing information, revenue sharing, distribution rights and lifecycle management information associated with the media content. Technical and business SLA terms can be consolidated in a single SLA between the parties or alternatively they can be defined as separate SLAs.

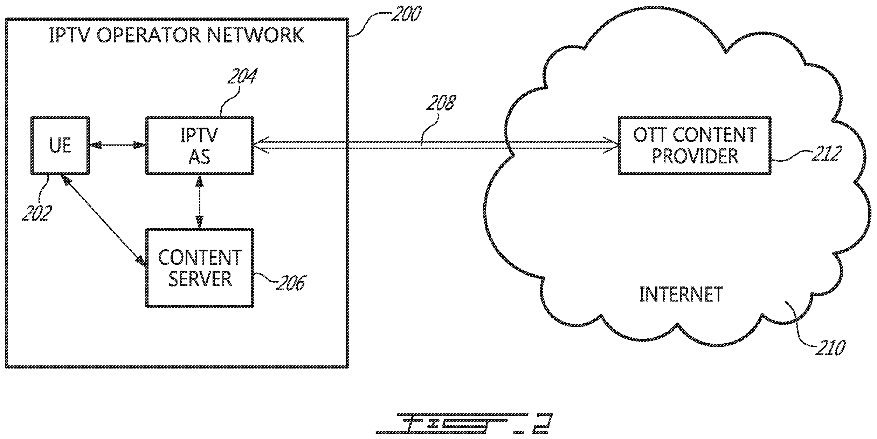

Figure 2 is a block diagram of a network architecture according to an embodiment of the present invention. Within the IPTV operator network 200, a user equipment (UE) 202 communicates with an IPTV Application Server (AS) 204 and a content server 206. The UE 202 can be any set-top box, computer, mobile phone or device capable of displaying content to a user. The IPTV AS 204, which can also be referred to as IPTV middleware, is responsible for administrative and control functions, as described with respect to Figure 1, as well as storing VOD metadata and catalogue information and business and lifecycle information associated with the content available in the IPTV Operator Network 200. The IPTV AS 204 can also be capable of modifying UE-specific metadata or portal-specific data for presentation purposes. Data such as the Electronic Program Guide (EPG) or Playlist data can be presented differently according to which UE device is interacting with the IPTV AS 204, and also which specific user is requesting the data. The content server 206 is used to store the actual media files available for consumption by a subscriber. An SLA interface 208 is provided between the IPTV AS 204 and an OTT content provider server 212. The OTT content provider 212 can be a server or network entity which does not reside within the IPTV operator network 200. It can reside in another private network or the Internet 210.

An IPTV subscriber/user can choose to issue a request to their IPTV provider via their UE 202 to request a particular piece of OTT content they wish to view. The request is received by the IPTV AS 204. The IPTV AS 204 can determine that the requested content is not available in the IPTV network 200 (e.g. by determining that the request content is not stored on the content server 206). The IPTV AS 204 can determine that the requested content is available from an external content source, or alternatively, the user request may identify OTT content provider 212 as the source for the requested content. The IPTV AS 204 will determine whether or not the IPTV operator has a service level agreement in place with the OTT content provider 212. If there is no prior service level agreement in place, the IPTV AS 204 communicates with the OTT content provider 212 through the SLA interface 208 to establish a new ad hoc SLA between the two parties. As previously discussed, the ad hoc SLA can define both the delivery and business terms for making the requested content from the OTT content provider 212 available to the IPTV user. The new SLA may require validation from the IPTV AS 204 and the OTT content provider 212 prior to making requested content available.

The SLA interface 208 can be implemented using an application programming interface (API) between the IPTV AS 204 and the OTT content provider 212, such as a Representational state transfer (REST) Hypertext Transfer Protocol (HTTP) API. Those skilled in the art will appreciate that other types of APIs, for example an IMS API, can be used without departing from the scope of the present invention. The SLA interface 208 is utilized to negotiate the terms and conditions associated with the potential content exchange, or access, between the two parties. The API can provide a uniform interface for the identification of requested resources, for example using uniform resource identifier (URI) for the content; manipulation of the content, including any associated metadata; and information describing how to process the messages delivered over the API. The SLA interface 208 also configures the end-user authorization of the content for session setup and playback.

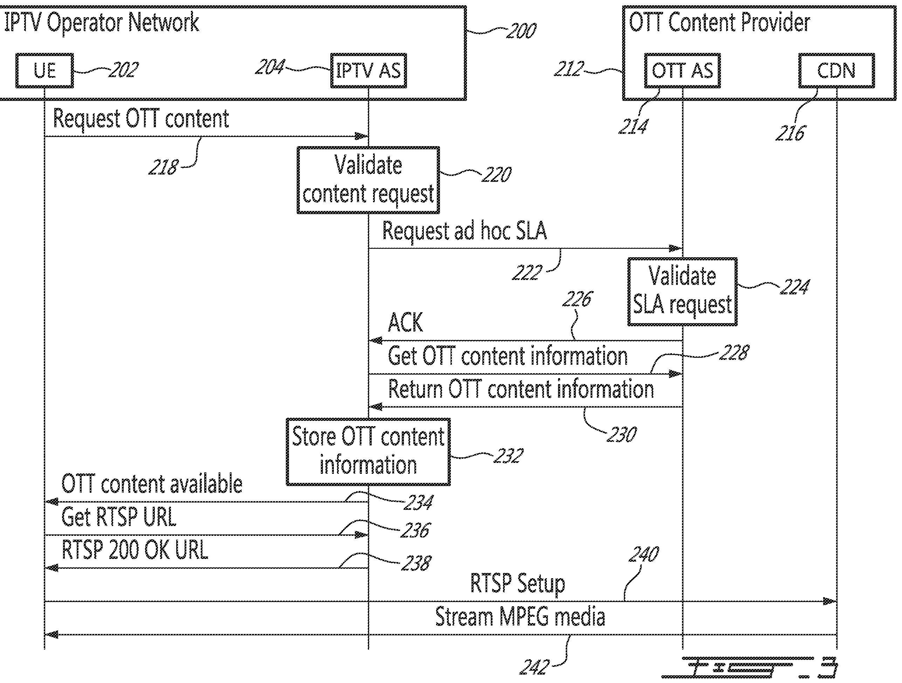

Figure 3 is a call flow diagram illustrating a further embodiment of the present invention. The external content provider, OTT content provider 212 of Figure 2, can comprise an OTT application server (AS) 214 and a content delivery network (CDN) 216. The functionality of OTT AS 214 and CDN 216 can be provided by a single network node or server, or they may separate network entities. The IPTV subscriber can input a request for OTT content via his UE 202. The UE 202 sends the request message 218 to the IPTV AS 204. The request 218 includes an identifier of the particular requested content and can also include an indication that OTT content provider 212 is the source of the requested content.

In step 220, the IPTV AS 204 validates the content request message 218. Validating the content request can include determining that the request content is not content that is available to be provided by the IPTV operator network 200. It can be determined that the requested content is offered by an external content provider such as OTT content provider 212. As part of validating the request, the IPTV AS 204 determines if the IPTV operator 200 and the OTT content provider 212 have an SLA in place. If not, the IPTV AS 204 determines that an SLA must be negotiated and established with the OTT content provider 212 in order to make the requested content available to the user.

The IPTV AS 204 sends request message 222 to the OTT AS 214 to request creation and establishment of an ad hoc SLA between the IPTV operator 200 and the OTT content provider 212. The request 222 is received by the OTT AS 214 and validated in step 224. Validation of the SLA request 224 can include agreeing on the technical delivery terms and the business terms for making the requested content available to the IPTV UE 202. There can be several messages exchanged between the OTT AS 214 and the IPTV AS 204 (not shown) in step 224 in order to negotiate and agree upon the terms of the requested ad hoc SLA. Following validation of the SLA request in step 224, the OTT AS 214 sends an acknowledgement message 226 to the IPTV AS 204 to confirm that the ad hoc SLA is now agreed upon and created. Optionally, the OTT AS 214 can send an IN_PROGRESS message to the IPTV AS 204 when it requires more time to handle the SLA request in step 224. The IN_PROGRESS message can indicate a time period when a response to the SLA request 222 will be returned. This can allow the IPTV AS 204 to notify the UE 202 that it will respond to the content request in a timely manner.

The IPTV AS 204 sends GET message 228 to request information associated with the requested OTT content. The OTT AS 214 receives the message 228 and returns the OTT content information in message 230. The OTT content information 230 can include metadata related to the OTT content.

The metadata can include: VOD Lifecycle information (such as Start License Window, Stop License Window, Gracewindow, etc.); VOD program metadata (such as title, price, category, URI(s) or uniform resource locator (URL) for session setup and playback); VOD Device Access information (such as number of simultaneous devices to access per Operator or per user, etc.); caching information (rules defining if local copies of the movie are to be stored in the IPTV Operator Network 200 for performance issues or if the content should remain resident on the OTT content provider 212); and other legal information related to copyright and redistribution rights. When it comes to URI(s), the SLA can define more than one URI for the same content based on redundancy and/or regions. For example URL1 can be set up to cover access for the east coast, while URL2 can cover the west coast. In step 232, the IPTV AS 204 stores the received OTT content information in memory. Step 232 can include adding metadata associated with the OTT content to a VOD library which lists content available on demand to IPTV subscribers. The IPTV AS 204 can then inform the user that the requested content is now available by sending OTT content available message 234 to the UE 202.

Upon receipt of availability indicator 234, the UE 202 requests the address to access the content with GET RTSP URL message 236. The IPTV AS 204 responds with the appropriate URL in RTSP 200 OK URL message 238. The UE 202 can then use the received URL address to contact the CDN 216 to request setup of an RTSP session with message 240. The CDN 216 receives message 240, establishes the RTSP content delivery session and begins streaming the requested MPEG media 242 to the UE 202. The IPTV user is now able to watch and listen to the requested OTT content on his UE 202.

Although the embodiment shown in Figure 3 was described using HTTP messages, it will be understood by those skilled in the art that any appropriate protocol or messaging format can be used without departing from the scope of the invention.

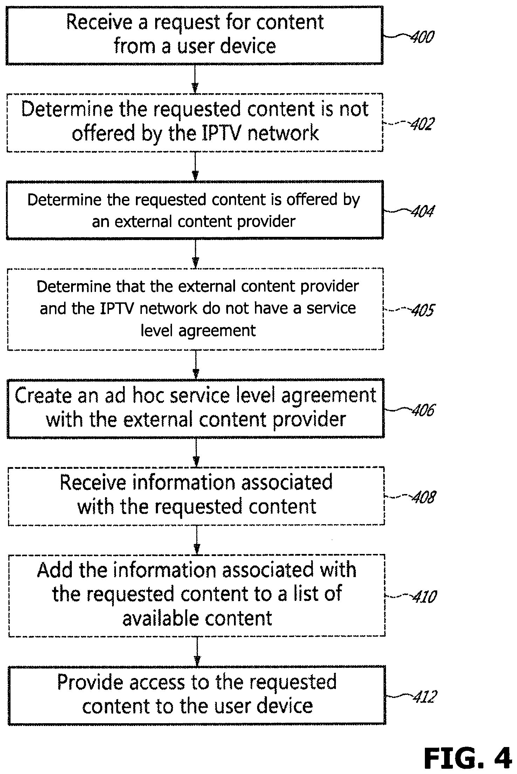

Figure 4 is a flow chart illustrating a method according to an embodiment of the present invention. The method begins in step 400 with receiving a request for content from a user device. The requested content can be audio, video, photos or any other type of media files. The user device can be a set-top box, computer or mobile device which is connected to an IPTV network. Optionally in step 402, it can be determined that the requested content is not offered by the IPTV network. This determination can be made by comparing an identifier, such as the name, of the requested content with metadata related to the content available in the IPTV network. Alternatively, this determination can be made by querying a content server in the IPTV network. Alternatively, the received request for content may indicate that the content is not available in the IPTV network.

In step 404, it is determined that the requested content is offered by an external content provider. The received request for content message, itself, may identify an external content provider capable of providing the content or the determination can be made otherwise. Optionally, at least one external content provider known to the IPTV network can be queried to ask if they offer the requested content.

It is determined in step 405 that the external content provider, associated with the requested content, and the IPTV network do not have an existing service level agreement in place. A list of external content providers having existing service level agreements with the IPTV network can be stored in memory.

An ad hoc service level agreement (SLA) is created with the external content provider in step 406. The ad hoc SLA can define the technical access details associated with the requested content such as URI, port number, QoS, protocol, etc. The ad hoc SLA can also define business rules associated with the requested content such as the price, revenue sharing model, lifecycle of the content from both an operator perspective and end-user perspective. The ad hoc SLA may require validation from both parties prior to its agreement and creation.

The ad hoc SLA can be an agreement created to provide access to the specific requested content to only the user device that issued the initial request. The ad hoc SLA can be an agreement to provide access to the requested content to a plurality of users, user devices, or all subscribers in the IPTV network. The ad hoc SLA can be an agreement to provide access to a larger set of external content, including the request content, to the user device. The set of external content can include all content that is provided by the external content provider. The ad hoc SLA can define a lifecycle, or an expiry time, for the requested content. In other words, access to the requested content can be provided to the IPTV network and/or user device for only a predetermined amount of time. The ad hoc SLA can define separate lifecycle terms for the content access between the two networks and the terms governing how long each user can consume the content. Note that the IPTV operator may choose to further refine or limit any lifecycle/expiry time that are specified in the SLA to meet his business needs.

Optionally, in step 408, information associated with the requested content is received. Optionally, in step 410, the received information can be imported and added to a list of available content in the IPTV network. The list can include content available to the user device that made the request, or alternatively it can list the content that is available to all users in the IPTV network. The information associated with the requested content can include metadata. The metadata can be added to a VOD library which defines a list of content that is available for user consumption in the IPTV network. The metadata can be included in the VOD library for only a predetermined amount of time, in accordance with the terms of the ad hoc SLA. Following the expiry of the predetermined amount of the time, the metadata can be removed from the VOD list and the requested content is no longer available to be accessed through the IPTV network.

Finally, in step 412, access to the requested content is provided to the user device. Providing access can include sending a message to the user device indicating that the requested content is available. Such an availability notification message can include an address, such as a URI, through which to access the requested content. The availability message can also include security or authentication information that the user device will require for accessing the content. Login and password information, or a security token, to access the external content provider can optionally be provided to the user device in step 412. The step of providing access can also alternatively include pushing the request content directly to the user device.

In an alternative embodiment, not shown in Figure 4, it can be determined that the external content provider and the IPTV network have an existing service level agreement in place, as opposed to step 405. In this case, it may be possible to access the requested content from the external content provider immediately and directly, without requiring the establishment of a new ad hoc SLA. The user device may already have any security/authentication information required to access content from the external content provider. In some cases, although an SLA may already exist between the IPTV operator and external content provider, for a given piece of content, the SLA may have to be refined or re-initiated between the parties.

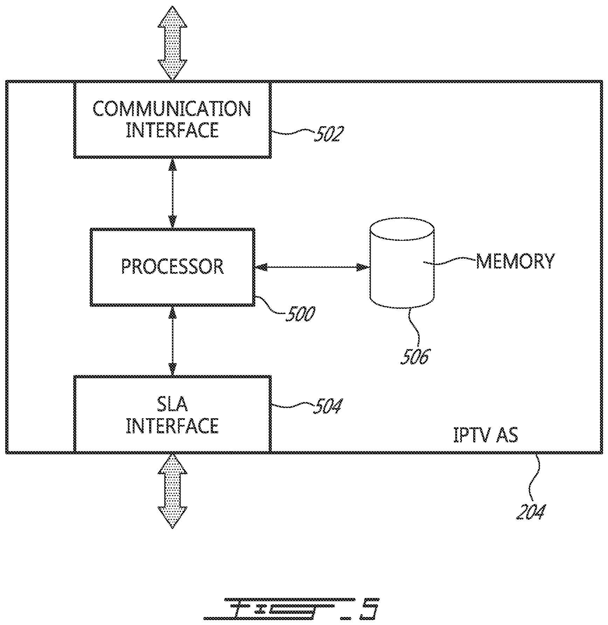

Figure 5 is a block diagram of an IPTV middleware node, such as IPTV AS 204. The IPTV middleware node 204 comprises a processor 500, a communication interface 502, and an SLA interface 504. The processor 500 can be in communication with a memory or data repository 506, which can be internal or external to the node 204. The SLA interface 504 is configured to communicate with an external content provider, or a number of content providers who are external to the IPTV operator network. The communication interface 502 is configured to communication with at least one user device in the IPTV network.

The communication interface 502 receives a request for content from a user device. The processor 500 can determine that the requested content is not offered by the IPTV network. This determination can be made by consulting the memory 506 which stores metadata associated with the content available in the IPTV network. Alternatively, the IPTV middleware node 204 can send a query to an IPTV content server, which stores the media files for all content available in the IPTV network, to determine if the requested content is available in the IPTV network. Alternatively, the request for content received from the user device may indicate that the content is available from an external content provider.

The processor 500 determines that that the requested content is offered by an external content provider. In response to determining that the IPTV AS 204 does not have a service level agreement with the external content provider, the processor 500 instructs the SLA interface 504 to create an ad hoc service level agreement with the external content provider. The SLA interface 504 may receive a confirmation or acknowledgement from the external content provider when the ad hoc service level agreement has been created and established. Information, or data, related to the requested content can also be received through the SLA interface 504. This information can be stored in the memory 506. The processor 500 can add the received information to a list of available content within the IPTV network. The information associated with the requested content can include metadata, and the metadata can be added to a VOD library or catalogue.

The created ad hoc service level agreement can be an agreement to provide access to the requested content to the user device. The created ad hoc service level agreement can be an agreement to provide access to all content offered by the external content provider, including the request content, to the user device. Access to the requested content can be provided to the user device for only a predetermined amount of time.

The processor 500 instructs the communication interface 502 to send a notification to the user device that the requested content is available, in accordance with the established ad hoc service level agreement. The notification sent to the user device can include a URI associated with the requested content.

Although communication interface 502 and SLA interface 504 are shown as separate logical entities in Figure 5, they can be implemented as a single network interface in the IPTV AS 204.

Embodiments of the present invention provide an IPTV subscriber with mechanisms to request external content to be made available through the IPTV network. Embodiments of the present invention also provide mechanisms for the IPTV operator to build a VOD catalogue one piece of content at a time, as requested by subscribers. The IPTV operator can utilize external content, which would be otherwise unavailable, to supplement income based on revenue-sharing models of the created ad hoc SLA. These mechanisms can allow an operator to grow his content offering business slowly without having to invest in extra infrastructure to support to additional content.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. The scope of the invention is defined solely by the claims appended hereto.

## Claims

1. A method for providing external content in an Internet Protocol Television, IPTV, operator network (200), the method comprising the steps:
receiving (400, 218) a request for Over-The-Top, OTT, content from a user device UE (202), the request comprising an identifier of the requested OTT content;
determining (402, 220) that the requested OTT content is not in a list of available OTT content offered by the IPTV operator network;
determining (404) that the requested OTT content is offered by an external Over-The-Top, OTT, content provider (212), the external OTT content provider being one of a server and a network entity which does not reside within the IPTV operator network;
in response to determining (405) that the external OTT content provider and the IPTV network do not have a service level agreement, SLA, creating (406, 222, 224) an ad hoc SLA with the external OTT content provider, the ad hoc SLA defining both the technical and the business level parameters for providing access to the external content within the IPTV operator network and comprising at least one of the following items associated with the requested OTT content: a Uniform Resource Indicator, URI, a port number, a Quality of Service, QoS, and a protocol, wherein creating the ad hoc SLA further comprises:
- sending an ad hoc SLA request (226) to the OTT content provider,
- receiving, from the OTT content provider, an acknowledgement message (226) to confirm that the ad hoc SLA is now agreed upon and created,
- receiving, from the OTT content provider, an IN_PROGRESS message when the OTT content provider requires more time to handle the ad hoc SLA request, wherein the IN_PROGRESS message indicates a time period when a response to the ad hoc SLA request (222) will be returned, and
- notifying the user device UE (202) whether the requested OTT content will be responded to in a timely manner;
adding (410, 232) the requested OTT content to the list of available OTT content offered by the IPTV network in accordance with the created ad hoc SLA; and
providing (412, 234, 236, 238, 240, 242) access to the requested OTT content to the user device in accordance with the created ad hoc SLA.

2. The method of claim 1, further comprising the step of receiving (230) information associated with the requested OTT content from the external OTT content provider.

3. The method of claim 2, wherein the information associated with the requested OTT content includes metadata, and the metadata is added to a video on demand, VOD, library.

4. The method of claim 1, wherein the created ad hoc SLA is an agreement to provide access to the requested OTT content to the user device.

5. The method of claim 1, wherein the created ad hoc SLA is an agreement to provide access to the requested OTT content to a plurality of user devices in the IPTV network.

6. The method of claim 1, wherein the created ad hoc SLA is an agreement to provide access to a set of external content, including the requested OTT content, to the user device.

7. The method of claim 1, wherein:
- access to the requested OTT content is provided to the user device for a predetermined amount of time; or
- the step of providing access to the requested OTT content to the user device includes sending an availability notification to the user device including the URI associated with the requested OTT content.

8. Computer-readable medium, comprising code portions, which, when executed on a processor, configure the processor to perform all steps of a method according to any one of the preceding claims.

9. An Internet Protocol Television, IPTV, middleware node (204), the IPTV middleware node being part of an IPTV operator network (200), comprising:
a service level agreement, SLA, interface (504) configured to communicate with an external Over-The-Top, OTT, content provider (212), the external OTT content provider being one of a server and a network entity which does not reside within the IPTV operator network;
a communication interface (502) configured to receive a request for OTT content from a user device UE (202), the request comprising an identifier of the requested OTT content;
a processor (500) configured to:
- determine that the requested OTT content is not in a list of available OTT content offered by the IPTV network,
- determine that the requested OTT content is offered by the external OTT content provider,
- in response to determining that the IPTV middleware node does not have a SLA with the external OTT content provider, transmit a request to create an ad hoc SLA with the external OTT content provider through the SLA interface, the ad hoc SLA defining both the technical and the business level parameters for providing access to the external content within the IPTV operator network and
comprising at least one of the following items associated with the requested OTT content: a Uniform Resource Indicator, URI, a port number, a Quality of Service, QoS, and a protocol, wherein, in the operation of creating the ad hoc SLA, the processor is further configured to:
-- send an ad hoc SLA request (226) to the OTT content provider,
-- receive, from the OTT content provider, an acknowledgement message (226) to confirm that the ad hoc SLA is now agreed upon and created,
-- receive, from the OTT content provider, an IN_PROGRESS message when the OTT content provider requires more time to handle the ad hoc SLA request, wherein the IN_PROGRESS message indicates a time period when a response to the ad hoc SLA request (222) will be returned, and
-- notify the user device UE (202) whether the requested OTT content will be responded to in a timely manner,
- add the requested OTT content to the list of available OTT content offered by the IPTV network in accordance with the created ad hoc SLA, and
- send a notification to the user device that the requested OTT content is available, in accordance with the created ad hoc SLA, through the communication interface.

10. The IPTV middleware node of claim 9, wherein the SLA interface is configured to receive information associated with the requested OTT content from the external OTT content provider.

11. The IPTV middleware node of claim 10, wherein the information associated with the requested OTT content includes metadata, and the metadata is added to a video on demand, VOD, library.

12. The IPTV middleware node of claim 9, wherein the created ad hoc SLA is an agreement to provide access to the requested OTT content to the user device.

13. The IPTV middleware node of claim 12, wherein access to the requested OTT content is provided to the user device for a predetermined amount of time.

14. The IPTV middleware node of claim 9, wherein:
- the created ad hoc SLA is an agreement to provide access to a set of external content, including the requested OTT content, to the user device; or
- the notification sent to the user device includes the URI associated with the requested OTT content.

## Patentansprüche

1. Verfahren zum Bereitstellen von externem Inhalt in einem Internet-Protocol-Television-, IPTV-, Betreibernetz (200), wobei das Verfahren die Schritte umfasst:
Empfangen (400, 218) einer Anforderung für Over-The-Top-, OTT-, Inhalt von einem Benutzergerät, UE, (202), wobei die Anforderung eine Kennung des angeforderten OTT-Inhalts umfasst;
Bestimmen (402, 220), dass der angeforderte OTT-Inhalt nicht in einer Liste verfügbarer OTT-Inhalte enthalten ist, die von dem IPTV-Betreibernetz angeboten werden;
Bestimmen (404), dass der angeforderte OTT-Inhalt von einem externen Over-The-Top-, OTT-, Inhaltsanbieter (212) angeboten wird, wobei der externe OTT-Inhaltsanbieter entweder ein Server oder eine Netzeinheit ist, die sich nicht innerhalb des IPTV-Betreibernetzes befindet;
als Reaktion auf das Bestimmen (405), dass der externe OTT-Inhaltsanbieter und das IPTV-Netz keine Dienstgütevereinbarung, SLA (service level agreement), haben, Erstellen (406, 222, 224) einer Ad-hoc-SLA mit dem externen OTT-Inhaltsanbieter, wobei die Ad-hoc-SLA sowohl die Parameter der technischen als auch geschäftlichen Ebene für die Bereitstellung des Zugriffs auf den externen Inhalt innerhalb des IPTV-Betreibernetzes definiert, und
mindestens eines der dem angeforderten OTT-Inhalt zugeordneten folgenden Elemente umfasst: einen Uniform Resource Indicator, URI, eine Portnummer, eine Dienstgüte, QoS (Quality of Service), und ein Protokoll, wobei das Erzeugen des Ad-hoc-SLA ferner umfasst:
- Senden einer Ad-hoc-SLA-Anforderung (226) an den OTT-Inhaltsanbieter,
- Empfangen einer Bestätigungsnachricht (226) von dem OTT-Inhaltsanbieter, um zu bestätigen, dass das Ad-hoc-SLA nun vereinbart und erstellt ist,
- Empfangen einer IN_PROGRESS-Nachricht von dem OTT-Inhaltsanbieter, wenn der OTT-Inhaltsanbieter mehr Zeit benötigt, um die Ad-hoc-SLA-Anfrage zu bearbeiten, wobei die IN_PROGRESS-Nachricht einen Zeitraum angibt, in dem eine Antwort auf die Ad-hoc-SLA-Anforderung (222) zurückgegeben wird, und
- Benachrichtigen des Benutzergeräts, UE, (202), ob auf den angeforderten OTT-Inhalt rechtzeitig geantwortet werden wird;
Hinzufügen (410, 232) des angeforderten OTT-Inhalts zu der Liste der verfügbaren OTT-Inhalte, die vom IPTV-Netz angeboten werden, in Übereinstimmung mit dem erstellten Ad-hoc-SLA; und
Bereitstellen (412, 234, 236, 238, 240, 242) des Zugriffs auf den angeforderten OTT-Inhalt für das Benutzergerät in Übereinstimmung mit dem erstellten Ad-hoc-SLA.

2. Verfahren nach Anspruch 1, ferner umfassend den Schritt des Empfangens (230) von Informationen, die dem angeforderten OTT-Inhalt zugeordnet sind, von dem externen OTT-Inhaltsanbieter.

3. Verfahren nach Anspruch 2, wobei die dem angeforderten OTT-Inhalt zugeordneten Informationen Metadaten umfassen und die Metadaten zu einer Video-on-Demand-, VOD-, Bibliothek hinzugefügt werden.

4. Verfahren nach Anspruch 1, wobei das erstellte Ad-hoc-SLA eine Vereinbarung ist, um dem Benutzergerät Zugriff auf den angeforderten OTT-Inhalt bereitzustellen.

5. Verfahren nach Anspruch 1, wobei das erstellte Ad-hoc-SLA eine Vereinbarung ist, um einer Mehrzahl von Benutzergeräten in dem IPTV-Netzwerk Zugriff auf den angeforderten OTT-Inhalt bereitzustellen.

6. Verfahren nach Anspruch 1, wobei das erstellte Ad-hoc-SLA eine Vereinbarung ist, um dem Benutzergerät Zugriff auf einen Satz externer Inhalte, einschließlich dem angeforderten OTT-Inhalt, bereitzustellen.

7. Verfahren nach Anspruch 1, wobei:
- der Zugriff auf den angeforderten OTT-Inhalt dem Benutzergerät für eine vorbestimmte Zeitspanne bereitgestellt wird; oder
- der Schritt des Bereitstellens des Zugriffs auf den angeforderten OTT-Inhalt für das Benutzergerät das Senden einer Verfügbarkeitsbenachrichtigung an das Benutzergerät umfasst, die den dem angeforderten OTT-Inhalt zugeordneten URI umfasst.

8. Computerlesbares Medium, das Codeabschnitte umfasst, die, wenn sie auf einem Prozessor ausgeführt werden, den Prozessor konfigurieren, um alle Schritte eines Verfahrens nach einem der vorhergehenden Ansprüche auszuführen.

9. Internet-Protocol-Television-, IPTV-, Middleware-Knoten (204), wobei der IPTV-Middleware-Knoten Teil eines IPTV-Betreibernetzes (200) ist, umfassend:
eine Dienstgütevereinbarungs-, SLA-, Schnittstelle (504), die dazu konfiguriert ist, mit einem externen Over-The-Top-, OTT-, Inhaltsanbieter (212) zu kommunizieren, wobei der externe OTT-Inhaltsanbieter entweder ein Server oder eine Netzeinheit ist, der/die sich nicht innerhalb des IPTV-Betreibernetzes befindet;
eine Kommunikationsschnittstelle (502), die dazu konfiguriert ist, eine Anforderung für einen OTT-Inhalt von einem Benutzergerät, UE, (202) zu empfangen, wobei die Anforderung eine Kennung des angeforderten OTT-Inhalts umfasst;
einen Prozessor (500), der konfiguriert ist, um:
- zu bestimmen, dass der angeforderte OTT-Inhalt nicht in einer Liste verfügbarer OTT-Inhalte enthalten ist, die von dem IPTV-Netz angeboten werden,
- zu bestimmen, dass der angeforderte OTT-Inhalt von dem externen OTT-Inhaltsanbieter angeboten wird,
- als Reaktion auf das Bestimmen, dass der IPTV-Middleware-Knoten kein SLA mit dem externen OTT-Inhaltsanbieter hat, über die SLA-Schnittstelle eine Anforderung zum Erstellen eines Ad-hoc-SLA mit dem externen OTT-Inhaltsanbieter zu senden, wobei das Ad-hoc-SLA die Parameter der technischen als auch der geschäftlichen Ebene für die Bereitstellung des Zugriffs auf den externen Inhalt innerhalb des IPTV-Betreibernetzes definiert und mindestens eines der dem angeforderten OTT-Inhalt zugeordneten folgenden Elemente umfasst: einen Uniform Resource Indicator, URI, eine Portnummer, eine Dienstgüte, QoS, und ein Protokoll, wobei der Prozessor im Betrieb des Erstellens des Ad-hoc-SLA ferner konfiguriert ist, um:
-- an den OTT-Inhaltsanbieter eine Ad-hoc-SLA-Anforderung (226) zu senden,
-- von dem OTT-Inhaltsanbieter eine Bestätigungsnachricht (226) zu empfangen, um zu bestätigen, dass das Ad-hoc-SLA nun vereinbart und erstellt ist,
-- von dem OTT-Inhaltsanbieter eine IN_PROGRESS-Nachricht zu empfangen, wenn der OTT-Inhaltsanbieter mehr Zeit benötigt, um die Ad-hoc-SLA-Anforderung zu bearbeiten, wobei die IN_PROGRESS-Nachricht einen Zeitraum angibt, in dem eine Antwort auf die Ad-hoc-SLA-Anforderung (222) zurückgegeben wird, und
-- das Benutzergerät, UE, (202) zu benachrichtigen, ob der angeforderte OTT-Inhalt rechtzeitig beantwortet werden wird,
- den angeforderten OTT-Inhalt zu der Liste der verfügbaren OTT-Inhalte hinzuzufügen, die von dem IPTV-Netz in Übereinstimmung mit dem erstellten Ad-hoc-SLA angeboten werden, und
- über die Kommunikationsschnittstelle eine Benachrichtigung an das Benutzergerät zu senden, dass der angeforderte OTT-Inhalt in Übereinstimmung mit dem erstellten Ad-hoc-SLA verfügbar ist.

10. IPTV-Middleware-Knoten nach Anspruch 9, wobei die SLA-Schnittstelle dazu konfiguriert ist, dem angeforderten OTT-Inhalt zugeordnete Informationen von dem externen OTT-Inhaltsanbieter zu empfangen.

11. IPTV-Middleware-Knoten nach Anspruch 10, wobei die dem angeforderten OTT-Inhalt zugeordneten Informationen Metadaten umfassen und die Metadaten zu einer Video-on-Demand-, VOD-, Bibliothek hinzugefügt werden.

12. IPTV-Middleware-Knoten nach Anspruch 9, wobei das erstellte Ad-hoc-SLA eine Vereinbarung ist, um dem Benutzergerät Zugriff auf den angeforderten OTT-Inhalt bereitzustellen.

13. IPTV-Middleware-Knoten nach Anspruch 12, wobei der Zugriff auf den angeforderten OTT-Inhalt dem Benutzergerät für eine vorbestimmte Zeitspanne bereitgestellt wird.

14. IPTV-Middleware-Knoten nach Anspruch 9, wobei:
- das erstellte Ad-hoc-SLA eine Vereinbarung ist, um dem Benutzergerät Zugriff auf einen Satz von externen Inhalten, einschließlich des angeforderten OTT-Inhalts, bereitzustellen; oder
- die an das Benutzergerät gesendete Benachrichtigung den dem angeforderten OTT-Inhalt zugeordneten URI umfasst.

## Revendications

1. Procédé pour fournir un contenu externe dans un réseau opérateur de télévision sur protocole Internet, IPTV (200), le procédé comprenant les étapes consistant à :
recevoir (400, 218) une demande de contenu Over-The-Top, OTT, depuis un dispositif utilisateur UE (202), la demande comprenant un identifiant du contenu OTT demandé ;
déterminer (402, 220) que le contenu OTT demandé ne figure pas sur une liste de contenu OTT disponible offert par le réseau d'opérateurs IPTV ;
déterminer (404) que le contenu OTT demandé est offert par un fournisseur de contenu Over-The-Top, OTT, externe (212), le fournisseur de contenu OTT externe étant l'un d'un serveur et d'une entité de réseau qui ne réside pas au sein du réseau d'opérateurs IPTV ;
en réponse à la détermination (405) que le fournisseur de contenu OTT externe et le réseau IPTV n'ont pas d'accord de niveau de service, SLA, créer (406, 222, 224) un SLA ad hoc avec le fournisseur de contenu OTT externe, le SLA ad hoc définissant à la fois les paramètres techniques et commerciaux pour fournir l'accès au contenu externe au sein du réseau d'opérateurs IPTV et
comprenant au moins l'un des éléments suivants associés au contenu OTT demandé : un indicateur de ressource uniforme, URI, un numéro de port, une qualité de service, QoS et un protocole, dans lequel la création du SLA ad hoc comprend en outre :
- l'envoi d'une requête SLA ad hoc (226) au fournisseur de contenu OTT,
- la réception, depuis le fournisseur de contenu OTT, d'un message d'accusé de réception (226) pour confirmer que le SLA ad hoc est maintenant convenu et créé,
- la réception, depuis le fournisseur de contenu OTT, d'un message IN_PROGRESS lorsque le fournisseur de contenu OTT demande plus de temps pour traiter la demande SLA ad hoc, dans lequel le message IN_PROGRESS indique une période de temps pendant laquelle une réponse à la demande SLA ad hoc (222) sera retournée, et
- la notification au dispositif utilisateur UE (202) concernant le fait de savoir si le contenu OTT demandé recevra une réponse en temps opportun ;
l'ajout (410, 232) du contenu OTT demandé à la liste du contenu OTT disponible offert par le réseau IPTV conformément au SLA ad hoc créé ; et
la fourniture (412, 234, 236, 238, 240, 242), au dispositif utilisateur, de l'accès au contenu OTT demandé conformément au SLA ad hoc créé.

2. Procédé selon la revendication 1, comprenant en outre l'étape de réception (230) d'informations associées au contenu OTT demandé depuis le fournisseur de contenu OTT externe.

3. Procédé selon la revendication 2, dans lequel les informations associées au contenu OTT demandé comprennent des métadonnées, et les métadonnées sont ajoutées à une bibliothèque de vidéo à la demande, VOD.

4. Procédé selon la revendication 1, dans lequel le SLA ad hoc créé est un accord pour fournir, au dispositif utilisateur, l'accès au contenu OTT demandé.

5. Procédé selon la revendication 1, dans lequel le SLA ad hoc créé est un accord pour fournir, à une pluralité de dispositifs utilisateur dans le réseau IPTV, l'accès au contenu OTT demandé.

6. Procédé selon la revendication 1, dans lequel le SLA ad hoc créé est un accord pour fournir, au dispositif utilisateur, l'accès à un ensemble de contenu externe, y compris le contenu OTT demandé.

7. Procédé selon la revendication 1, dans lequel :
- l'accès au contenu OTT demandé est fourni au dispositif utilisateur pendant une durée prédéterminée ; ou
- l'étape de fourniture, au dispositif utilisateur, de l'accès au contenu OTT demandé comprend l'envoi d'une notification de disponibilité au dispositif utilisateur comprenant l'URI associé au contenu OTT demandé.

8. Support lisible par ordinateur comprenant des parties de code qui, lorsqu'elles sont exécutées sur un processeur, configurent le processeur pour exécuter toutes les étapes d'un procédé selon l'une quelconque des revendications de procédé précédentes.

9. Nœud middleware de télévision sur protocole Internet, IPTV (204), le nœud middleware IPTV faisant partie d'un réseau d'opérateurs IPTV (200), comprenant :
une interface d'accord de niveau de service, SLA, (504) configurée pour communiquer avec un fournisseur de contenu Over-The-Top, OTT, externe (212), le fournisseur de contenu OTT externe étant l'un d'un serveur et d'une entité de réseau qui ne réside pas dans le réseau d'opérateurs IPTV ;
une interface de communication (502) configurée pour recevoir une demande de contenu OTT depuis un dispositif utilisateur UE (202), la demande comprenant un identifiant du contenu OTT demandé ;
un processeur (500) configuré pour :
- déterminer que le contenu OTT demandé ne figure pas sur une liste de contenu OTT disponible offert par le réseau IPTV,
- déterminer que le contenu OTT demandé est offert par le fournisseur de contenu OTT externe,
- en réponse à la détermination que le nœud intergiciel IPTV n'a pas de SLA avec le fournisseur de contenu OTT externe, transmettre une demande de création d'un SLA ad hoc avec le fournisseur de contenu OTT externe via l'interface SLA, le SLA ad hoc définissant à la fois les paramètres techniques et commerciaux pour fournir l'accès au contenu externe au sein du réseau d'opérateurs IPTV et
comprenant au moins l'un des éléments suivants associés au contenu OTT demandé : un indicateur de ressource uniforme, URI, un numéro de port, une qualité de service, QoS, et un protocole, dans lequel, dans l'opération de création du SLA ad hoc, le processeur est en outre configuré pour :
-- envoyer une requête SLA ad hoc (226) au fournisseur de contenu OTT,
-- recevoir, du fournisseur de contenu OTT, un message d'accusé de réception (226) pour confirmer que le SLA ad hoc est maintenant convenu et créé,
-- recevoir, du fournisseur de contenu OTT, un message IN_PROGRESS lorsque le fournisseur de contenu OTT demande plus de temps pour traiter la demande SLA ad hoc, le message IN_PROGRESS indiquant une période de temps pendant laquelle une réponse à la demande SLA ad hoc (222) sera être retournée, et
-- notifier au dispositif utilisateur UE (202) concernant le fait de savoir si le contenu OTT demandé recevra une réponse en temps opportun,
- ajouter le contenu OTT demandé à la liste de contenu OTT disponible offert par le réseau IPTV conformément au SLA ad hoc créé, et
- envoyer une notification au dispositif utilisateur indiquant que le contenu OTT demandé est disponible, conformément au SLA ad hoc créé, via l'interface de communication.

10. Nœud intergiciel IPTV selon la revendication 9, dans lequel l'interface SLA est configurée pour recevoir des informations associées au contenu OTT demandé depuis le fournisseur de contenu OTT externe.

11. Nœud intergiciel IPTV selon la revendication 10, dans lequel les informations associées au contenu OTT demandé comprennent des métadonnées, et les métadonnées sont ajoutées à une bibliothèque de vidéo à la demande, VOD.

12. Nœud intergiciel IPTV selon la revendication 9, dans lequel le SLA ad hoc créé est un accord pour fournir, au dispositif utilisateur, l'accès au contenu OTT demandé.

13. Nœud intergiciel IPTV selon la revendication 12, dans lequel l'accès au contenu OTT demandé est fourni au dispositif utilisateur pendant une durée prédéterminée.

14. Nœud intergiciel IPTV selon la revendication 9, dans lequel :
- le SLA ad hoc créé est un accord pour fournir au dispositif utilisateur l'accès à un ensemble de contenu externe, y compris le contenu OTT demandé ; ou
- la notification envoyée au dispositif utilisateur comprend l'URI associée au contenu OTT demandé.
